# EUROPEAN PATENT SPECIFICATION

(11) **EP 0 889 642 B1**
(45) Date of publication and mention of the grant of the patent: **16.08.2006**
(21) Application number: 98305372.9
(22) Date of filing: 06.07.1998
(51) Int. Cl.: H04N 1/405

(54) **Image processing apparatus and method**
Bildverarbeitungsvorrichtung und verfahren
Appareil et procédé de traitement d'images

(30) Priority: 04.07.1997 KR 9730927
(43) Date of publication of application: 07.01.1999
(73) Proprietor: SAMSUNG ELECTRONICS CO. LTD., Kyonggi-do Seoul (KR)
(72) Inventor: Han, Ji-hoon, Nowon-gu, Seoul (KR)
(74) Representative: Lunt, Mark George Francis

(56) References cited:
- EP-A- 0 295 105
- EP-A- 0 395 404
- US-A- 5 051 844
- US-A- 5 150 429

## Description

The present invention relates to an image processing apparatus and method for binarizing an image. More particularly, the present invention relates to image processing apparatus and method for binarizing an image scanned by a shuttle scanning unit of a multifunctional machine which comprises a relatively small amount of memory.

Conventionally, a multifunctional machine is equipped with a scanning unit, a printer, a modem, a computer, etc. The multifunctional machine prints data scanned by the scanning unit or data transmitted from another systems via a modem using the printer, or stores the data on a hard disk of the computer. Such a multifunctional machine is manufactured to perform the functions of a facsimile, printer, scanner and a copying machine.

There are two types of the multifunctional machine; namely a shuttle type machines and array type machines. The array type has a relatively high scanning rate. However, the cost of the array type of machine is also relatively high. On the contrary, the shuttle type scans the document at a relatively slower speed as compared to the array type. However, since the shuttle type is low in price, it has widely been used.

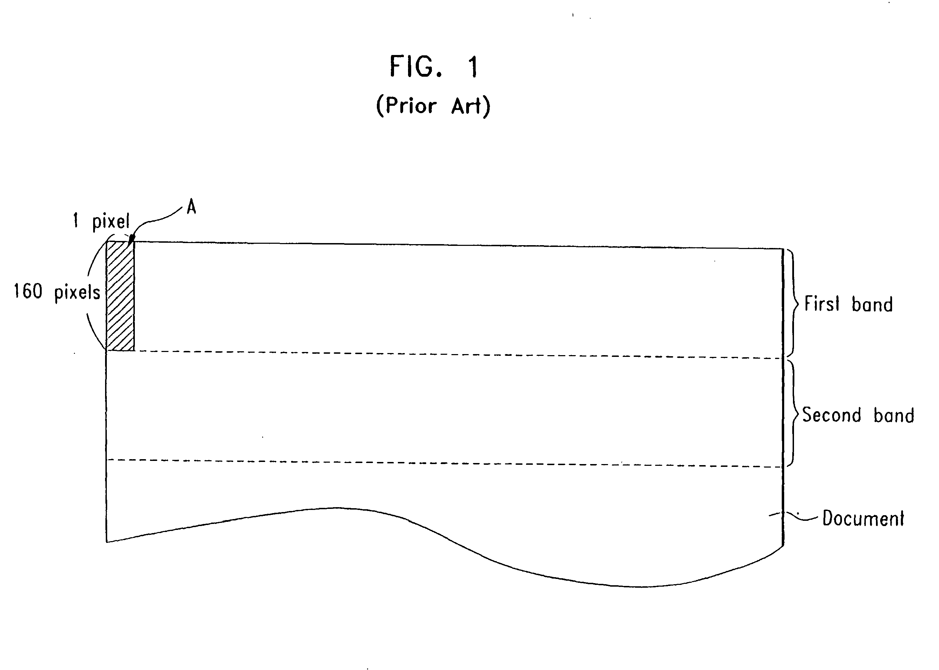

An explanation of the operation of the scanning operation of a conventional shuttle type multifunctional machine will be given with reference to figure 1. Firstly, a part of the document A is scanned by the scanning unit (not shown) of the multifunctional machine. The part A scanned by the scanning unit is indicated as a slice. The size of the slice, in terms of the number of pixels, is dictated by the pixel capacity of a charged coupled device (CCD) mounted on the scanning unit (not shown). The CCD device may typically comprise an array of 1x160 pixels in the horizontal and longitudinal directions respectively.

Scanning the document is performed by moving the scanning unit from the left most edge of the document to the right most edge of the document in increments of one slice. The scanning unit performs scanning by dividing the document into a plurality of bands. The size of the band has some bearing upon the amount of data which is scanned in a single traversal of the document.

In order to transmit data contained in the document in facsimile form by scanning the document, the scanned document is changed to data values of 0 or 1. Generally, the data values resulting from scanning a document are represented using bytes and take values of 0 and 255 inclusive. The values are expressed by 8 bits and the operation for changing the values into binary values is known as binarization.

EP 0 295 105 discloses an image processing method and apparatus that reads an image by dividing it into a number of areas and processing each of these areas in succession. Continuity is given to data of each of the areas by conducting digitisation in an overlapping manner from neighbouring areas, which assists in avoiding streak formation at the boundaries between different areas.

US 5,051,844 discloses a half-toning method for creating a binary image from a continuous-tone image or computer-generated graphics signal. The method comprises using a human visual blur function in a recursive error propagation algorithm so that a perceived error rather than a binary error is propagated.

Conventionally, the binarization operation comprises two methods, that is, an error diffusion method (EDF) and a threshold value method. Since these methods are well known to persons skilled in the art, detailed description thereof is omitted.

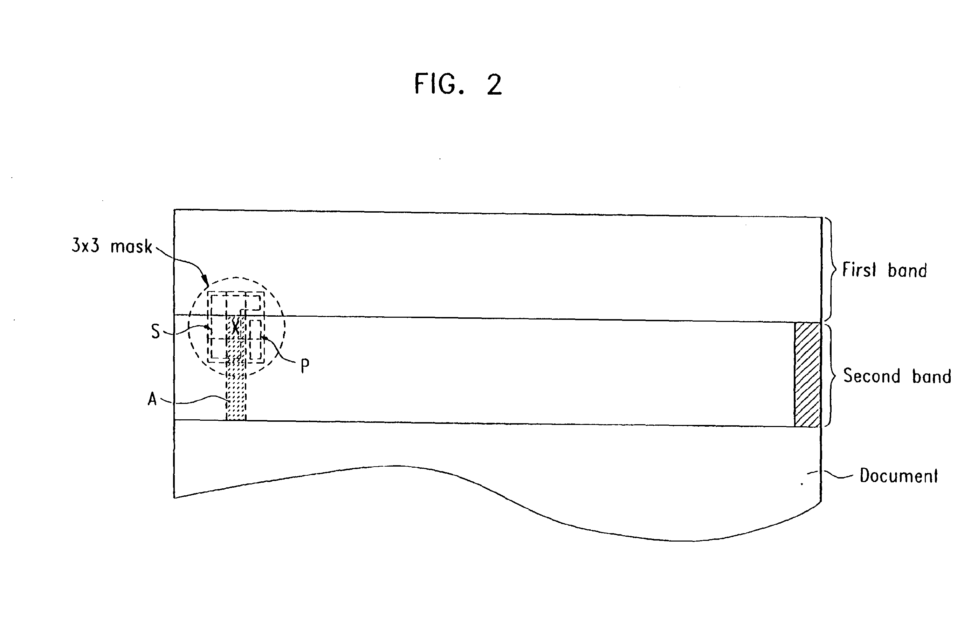

The binarization process according to the EDF method uses a 3x3 cell and is explained with reference to figure 2. In order to binarize one target pixel of data which has been scanned, data binarization is performed by diffusing an error value generated when binarizing 1 pixel to the 8 pixels neighbouring the target pixel according to the weight of each mask cell.

Generally, when performing binarization, since it is necessary to know the values of the neighboring pixels before performing the EDF operation, scanned first band data and second band data containing the region S shown in figure 2 are stored and processed. In addition, by substituting the value of the P region with a neighboring pixel value according to the principle of image processing, the image processing is performed by constituting the 3 x 3 mask. The size of the mask or its operating method can vary according to the binarization method, even within the same binarization process or method.

Since the conventional binarization method requires a memory for storing and processing the bands of data of the scanned document, the cost of the multifunctional machine is increased.

In addition, in the case of using a 3 x 3 mask for one band, since data is not contained in the end part of the band nor in the beginning part of the next band, a boundary between the two bands is formed. According to a first aspect of the present invention, there is provided an image processing method for binarizing an image scanned by a scanning unit of shuttle type which performs a shuttle movement and scans a document on a band basis such that a band comprises a plurality of slices, the method comprising the steps of:
scanning pixels of a current slice of a current band of a document;
binarizing each of the pixels of the current slice using a mask;
storing operation results of error values generated during binarizing of final pixels of a plurality of slices of the current band in a first memory;
storing operation results of error values generated during binarizing of each of the pixels of the current slice in a second memory,
wherein the step of binarising each of the pixels of the current slice comprises the steps of, for each of the first pixels of the plurality of slices of the current band, processing the operation results, previously stored in the first memory, of the error values of final pixels of a plurality of slices of a previous band and processing operation results, previously stored in the second memory, of error values generated during binarizing of each of the pixels of a previous slice of the current band; and
wherein the mask has 2 x 3 pixels comprising 1^{st}, 2^{nd} , 3^{rd} , and 4^{th} positions at co-ordinate values of (2, 1) , (1, 1) , (1, 2) and (1, 3) , respectively and a 5^{th}
wherein the mask has 2 x 3 pixels comprising 1^{st}, 2^{nd}, 3^{rd}, and 4^{th} positions at co-ordinate values of (2, 1), (1, 1), (1, 2) and (1, 3),respectively and a 5^{th} position of a current pixel, X, to be binarized at a coordinate position of (2, 2).

Advantageously, the present invention reduces the relative cost of a multifunctional machine by reducing the amount of memory required to implement an image processing apparatus which uses a conventional 3 x 3 mask.

It will be appreciated that a neighbouring band is not limited to an immediately adjacent previous band. A neighbouring band also encompasses an adjacent subsequent band to the predetermined band. Furthermore, the term neighbouring pixels encompasses not only those pixels which are immediately adjacent to a target pixel but also other selected pixels and preferably at or to any selected pixel depth in a given direction relative to the target pixel. The pixel depth is the distance, in terms of the number of pixels, of a given pixel from the target pixel or the width of a band of pixels which neighbour the target pixel.

Furthermore, an image processing device according to an embodiment, prevents the formation of the boundary line between bands of scanned data. Preferably, embodiments provide a method further comprising the step of forming the mask by:
shifting a value of the 1^{st} position of the mask to the 4^{th} position of the mask when binarising the first pixel of the current slice, reading, from said first memory, an error value of a final pixel of a slice of the previous band corresponding to the current pixel and placing the read value in the 1^{st} position of the mask;
shifting a value of the 4^{th} position of the mask to the 3^{rd} position of the mask, reading, from the second memory, an error value of a pixel of the previous slice corresponding to the current pixel, X, and placing the read error value in the 4^{th} position of the mask;
filling in the 1^{st} position of the mask with a value of a pixel, of the same slice, preceding the current pixel, X, when a signal for reading the value of the current, X, is received and the 1^{st} position is not occupied; and
when the 1^{st} position is occupied, shifting the value of the 4^{th} position of the mask to the 3^{rd} position of the mask and shifting the value of the 3^{rd} position of the mask to the 2^{nd} position of the mask, and placing an error value of a pixel of the previous slice having a horizontal coordinate value larger by one than that of the current pixel, X, in the 4^{th} position of the mask.

According to a second aspect of the present invention there is provided an image processing apparatus for binarizing an image scanned by a scanning unit of shuttle type which performs a shuttle movement and scans a document on a band basis such that a band comprises a plurality of slices, the apparatus comprising:
means for scanning pixels of a current slice of a current band of a document;
means for binarizing each of the pixels of the current slice using a mask;
means for storing operation results of error values generated during binarizing of final pixels of a plurality of slices of the current band in a first memory;
means for storing operation results of error values generated during binarizing of each of the pixels of the current slice in a second memory,
wherein the means for binarising each of the pixels of the current slice comprises means for processing, for each of the first pixels of the plurality of slices of the current band, the operation results, previously stored in the first memory, of the error values of final pixels of a plurality of slices of a previous band and means for processing operation results, previously stored in the second memory, of error values generated during binarizing of each of the pixels of a previous slice of the current band; and
wherein the mask has 2 x 3 pixels comprising 1^{st}, 2^{nd}, 3^{rd}, and 4^{th} positions at co-ordinates of (2, 1), (1, 1), (1, 2) and (1, 3), respectively and a 5^{th} position of a current pixel, X, at be binarized at coordinates of (2, 2).

An embodiment provides an apparatus further comprising means for forming the mask comprising:
means for shifting a value of the 1^{st} position of the mask to the 4^{th} position of the mask when binarizing the first pixel of the current slice, reading, from said first memory, an error value of a final pixel of a slice of the previous band corresponding to the current pixel and placing the read value in the 1^{st} position of the mask;
means for shifting a value of the 4^{th} position of the mask to the 3^{rd} position of the mask, reading, from the second memory, an error value of a pixel of the previous slice corresponding to the current pixel, X, and placing the read error value in the 4^{th} position of the mask;
means for filling in the 1^{st} position of the mask with a value of a pixel, of the same slice, preceding the current pixel, X, when a signal for reading the value of the current, X, is received and the 1^{st} position is not occupied; and
means for shifting the value of the 4^{th} position of the mask to the 3^{rd} position of the mask and shifting the vale of the 3^{rd} position of the mask to the 2^{nd} position of the mask when the 1^{st} position is occupied, and means for placing an error value of a pixel of the previous slice having a horizontal coordinate value larger by one than that of the current pixel, X, in the 4^{th} position of the mask.

Embodiments of the present invention will now be described by way of example only with reference to the accompanying drawings in which:
figure 1 illustrates a scanning operation of a conventional shuttle type multifunctional machine;
figure 2 illustrates a binarization process according to an error diffusion method using a 3 x 3 mask of the conventional shuttle type multifunctional machine;
figure 3 is a front view of a conventional multifunctional machine equipped with a scanning unit and a printing unit of shuttle type;
figure 4 illustrates a side view of the scanning unit of figure 3;
figure 5 illustrates a 2 x 3 mask for image-processing according to the embodiment;
figure 6 illustrates image processing across a band boundary using the 2 x 3 mask (NW) according to the embodiment;
figure 7 is a block diagram illustrating an image processing apparatus for binarizing an image scanned by the scanning unit of a shuttle type according to the embodiment;
figures 8A and 8B are a flowchart illustrating an image processing method for binarizing an image scanned by the shuttle type scanning unit according to an embodiment;
figures 9A to 9D are views for explaining a process for forming the 2 x 3 mask (NW) using a first memory and a second memory; and
figures 10A to 10D are timing charts illustrating the synchronization process of signals generated by a signal generating unit according to the embodiment.

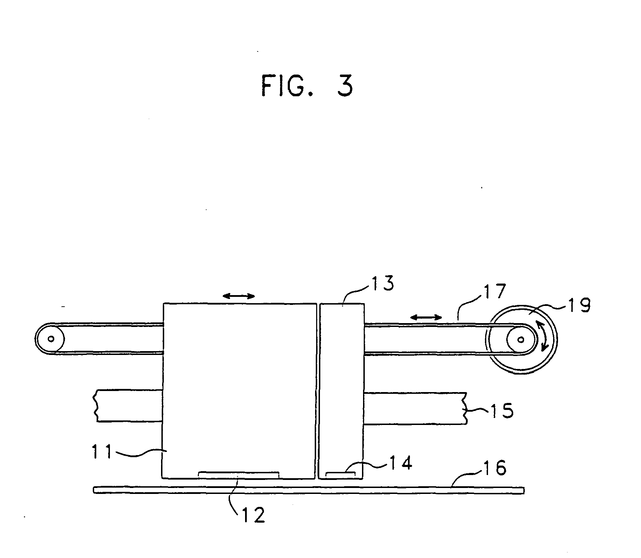

Referring to figure 3, there is shown a front view of a conventional multifunctional machine equipped with a scanning unit and a printing unit of the shuttle type. The operation of the conventional multifunctional machine equipped with the scanning unit and the printing unit of shuttle type is explained with reference to figure 3.

An ink-jet printer head module 11, which sprays ink onto a printable medium to allow printing, and a scanning module 13, which scans data from a document, are located closely to each other. For printing and scanning operations, they are mounted on a guide shaft 15 and are moved reciprocally right and left by a belt 17 in response to rotation of a driving motor 19.

According to an embodiment of the present invention, the target pixel traverses the document to be scanned by starting at the upper, preferably the top-left, portion of the document and finishing at the lower, preferably bottom-right, portion of the document. However, the traversal of the document by the target pixel is not limited thereto. It will be appreciated that some other traversal may be utilised. For example, an embodiment can be realised in which the direction of traversal is the opposite to that described above.

In operation, as the ink-jet printer head module 11 undergoes the reciprocal movement, the ink stored in the ink-jet printer head module 11 is sprayed onto the printable medium 16 through an ink-jet printer head unit 12.

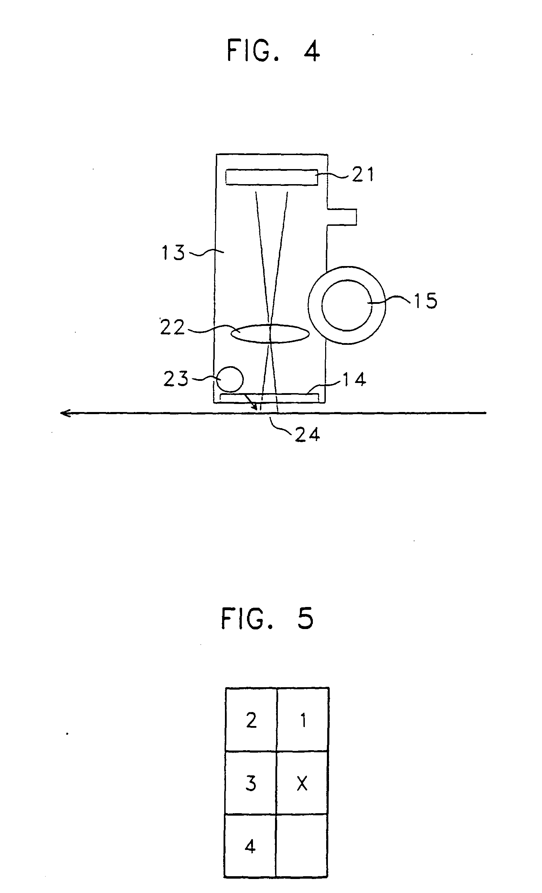

Similarly, during a scanning mode of operation, a lamp 23 in the scanning module 13 of figure 4 radiates light onto a scan position 24 of the document 16. The reflected light is focused onto an optical sensor 21 via a scanning glass 14 and a lens 22. The scanned image data is then binarized using an error diffusion (EDF) method with a 2 x 3 mask.

Referring to figure 5, there is shown the 2 x 3 mask for image-processing according to the embodiment. The cells of the 2x3 mask have respective associated values for use in performing an error value operation in relation to a pixel X. In a preferred embodiment, the cells of the mask comprise respective horizontal and vertical coordinate values. Accordingly, the coordinate values of positions 1 and 2 are (2, 1) and (1, 1), respectively. Similarly, the coordinate values of positions 3 and 4 are (1, 2) and (1, 3), respectively. The coordinate values of the position of the pixel X to be binarized is (2, 2).

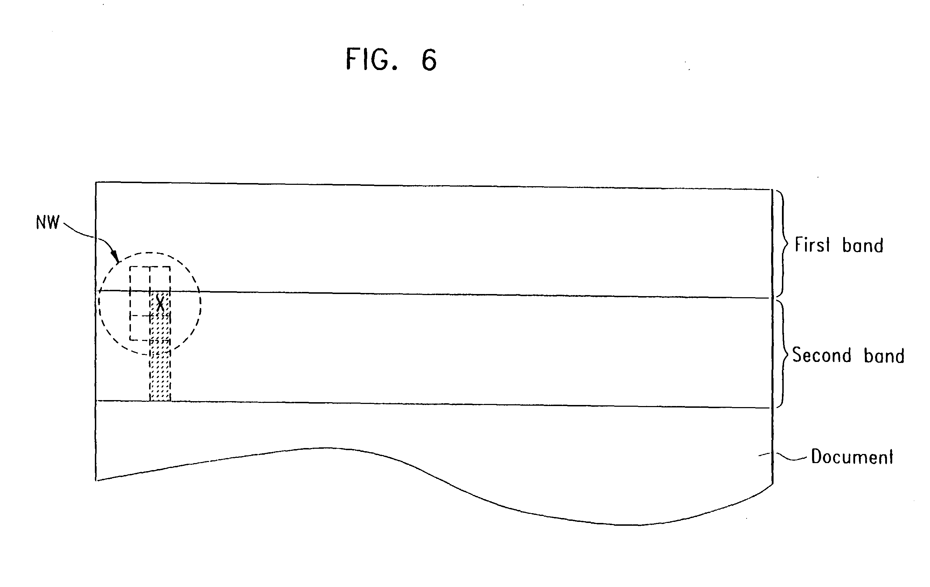

Figure 6 illustrates the image processing at a band boundary using the 2 x 3 mask (NW) according to the embodiment. The 2 x 3 mask (NW) is moved in the longitudinal direction of the slice in units of a single pixel and is binarized using the error value operation.

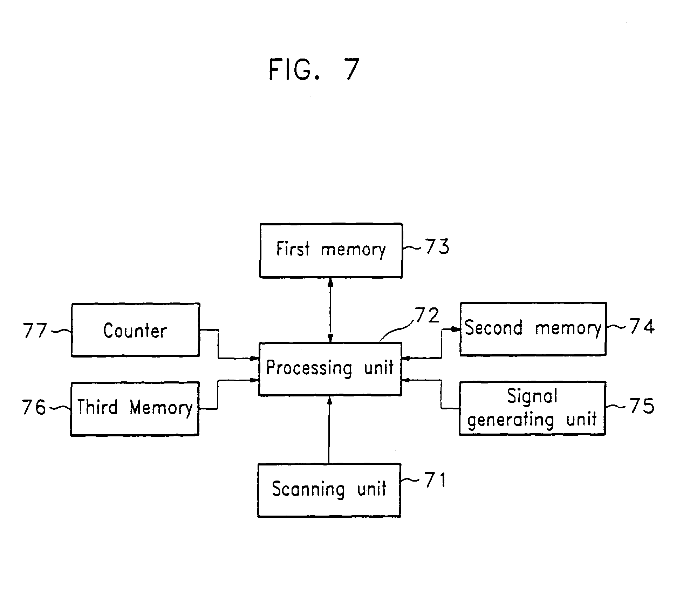

Figure 7 is a block diagram illustrating an image processing apparatus for binarizing the image scanned by the scanning unit of shuttle type according to the embodiment.

As shown in the drawing, the image processing apparatus includes: a scanning unit 71 for scanning pixels of the document on a per slice basis; a processing unit 72 for binarizing the pixels of the slice using the mask; a first memory 73 for storing error values generated in relation to the final pixels of a plurality of slices of the bands which have been binarized by the processing unit 72; a second memory 74 for storing error values generated in relation to each of the pixels of a scanned slice which has been binarized by the processing unit 72; a third memory 76 for storing a program for image-processing and data for image-processing; a signal generating unit 75 for generating a synchronization signal for binarizing the data; and a counter 77 for counting the number of slices scanned by the scanning unit 71.

To binarize each of the first pixels of a plurality of slices in a next band, the processing unit 72 scans the error values of the final pixels of a plurality of slices of the previous band stored in the first memory 73 and binarizes those final pixels. Afterwards, the processing unit 72 scans the second memory 74 and binarizes the next pixels, that is, the first pixels of a plurality of slices of the next band.

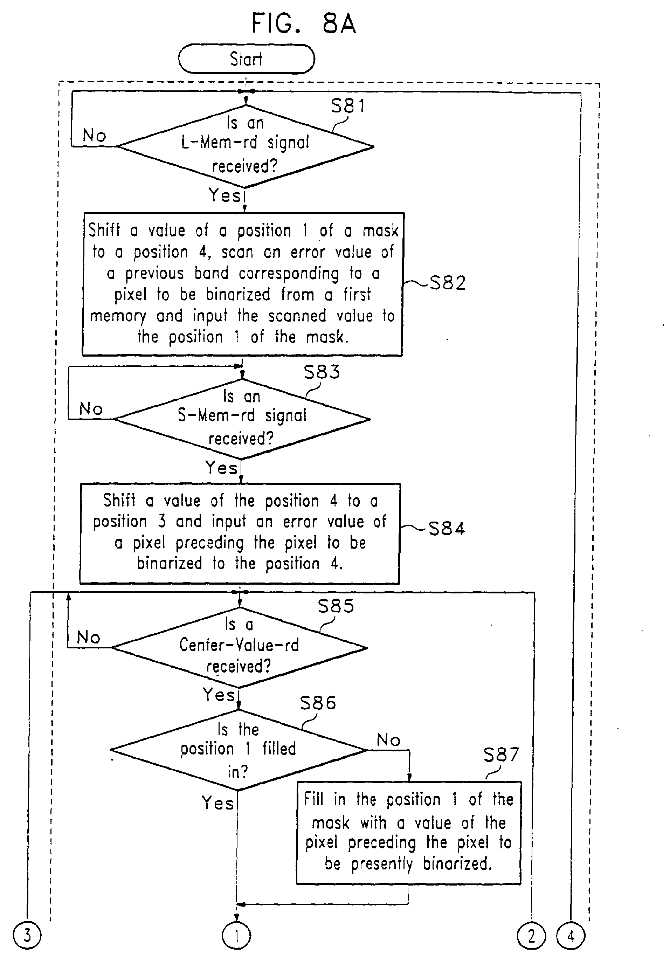

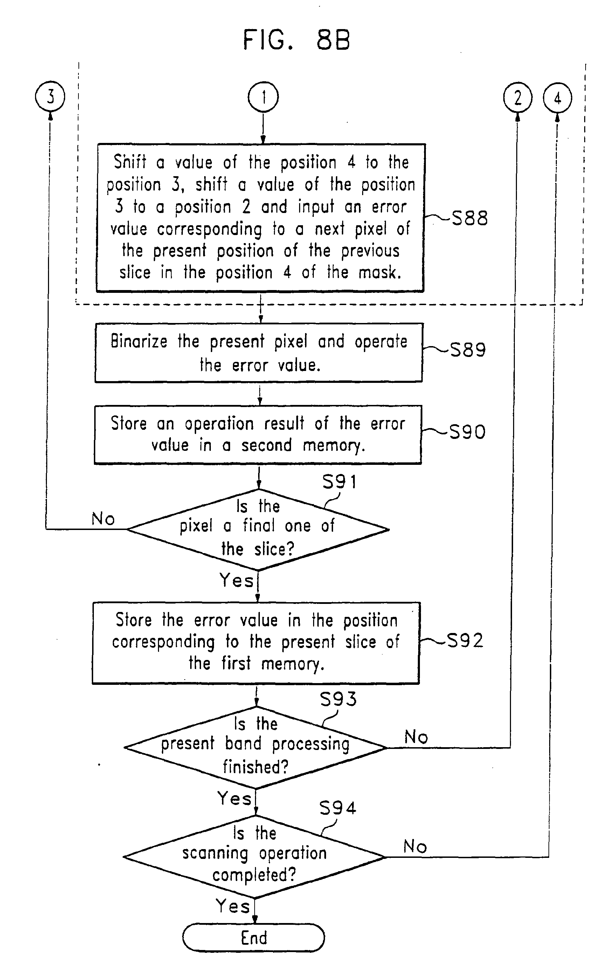

Figures 8A and 8B shown a flowchart illustrating the image processing method for binarizing the image scanned by the scanning unit of shuttle type according to the embodiment.

The image processing method for binarizing the image scanned by the scanning unit includes the steps of: determining whether a first memory scanning signal L-Mem-rd has been received, after the data of one slice has been scanned (step 81); when the first memory scanning signal L-Mem-rd has been received, shifting a value of the position 1 of the mask to the position 4, retrieving from the first memory 73 an error value of a final pixel of the slice of the previous band corresponding to the pixel to be binarized and storing the retrieved error value in the position 1 of the mask (step 82); determining whether or not a second memory scanning signal S-Mem-rd has been received (step 83); when the second memory scanning signal S-Mem-rd has been received, the value of at position 4 is shifted to position 3, the error value of a pixel preceding the pixel X to be binarized is retrieved from the second memory 74 and the retrieved error value is stored in position 4 (step 84); determining whether or not a Center-Value-rd signal for scanning the value of the pixel to be binarized has been received (step 85); checking whether position 1 of the mask contains a value (step 86); when the Center-Value-rd signal for scanning the value of the pixel to be binarized has been received and position 1 of the mask does not contain a value, position 1 of the mask is filled with the value of the pixel preceding the pixel X to be binarized in the same slice and scanning the pixel to be binarized (step 87); when position 1 of the mask contains a value, shifting the value of position 4 of the mask to position 3 and the value of position 3 to position 2, and storing the error value of the pixel of a previous slice having a horizontal coordinate value larger by one (1) than the pixel X to be binarized in position 4 of the mask (step 88); binarizing the present pixel value using the formed mask to produce an error value (step 89); storing the resulting error value in the second memory 74 (step 90); determining whether or not the pixel presently binarized is the final pixel of the slice, and when the pixel is not the final one at step 91, returning to step 85 if the pixel presently binarised is not the final pixel of the slice; when the pixel is the final one, storing the error value in the memory position of the first memory 73 which corresponds to the present slice (step 92); determining at step 93 whether the present band processing has been completed, and when the band processing has not been completed, returning to step 85; and determining at step 94 whether or not the scanning operation has been completed. If the scanning operation has not been completed, control returns to step 82.

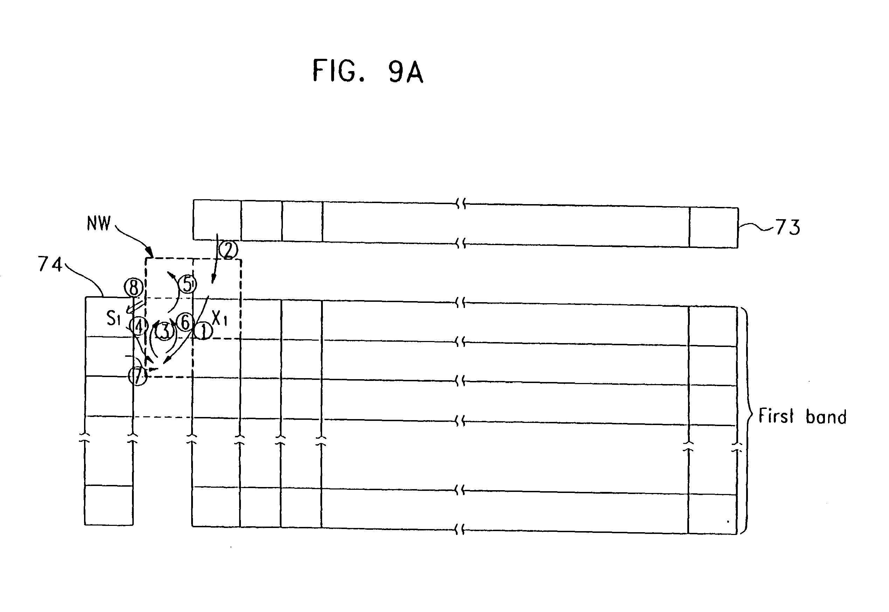

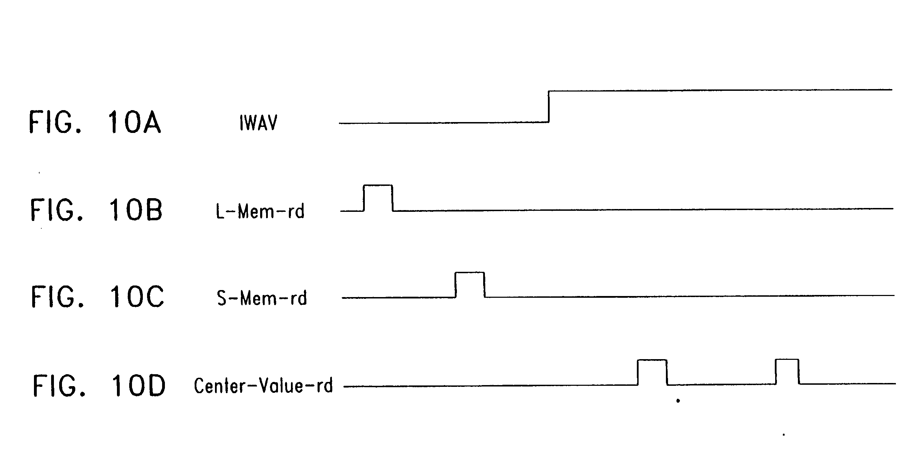

Figures 9A to 9D are views for illustrating the process of forming the 2 x 3 mask (NW) using the first and second memories. Figures 10A to 10D are timing charts for illustrating the synchronization process of the signals generated by the signal generating unit according to the embodiment.

Referring to figures 10A to 10D, the operation of the image processing apparatus for binarizing the image scanned by the scanning unit of a shuttle type according to the embodiment is explained as follows. Firstly, after processing the previous band before an IWAV signal, which indicates the beginning of the binarization image processing, is generated by the signal generating unit 75, a determination is made as to whether or not the first memory scanning signal L-Mem-rd for scanning the error information from the first memory 73, which stores error values of the final pixels of each of the stored slices, has been generated by the signal generating unit 75 (step 81). In a preferred embodiment, since previously produced error values are not set in the first and second memories, the error values are initialized to zero (0) and then binarized, when the pixels of the first slice of the first band are binarized.

When the first memory scanning signal L-Mem-rd is generated, the value of the position 1 of the mask shown in figure 5 is shifted to the position 4. Afterwards, the error value of pixel of the previous band corresponding to the pixel to be binarized is scanned from the first memory 73 and input to position 1 of the mask (step 82). In other words, operations □ and □ of figure 9A are performed.

After storing the values in positions 1 and 4, a determination is made as to whether or not the second memory scanning signal S-Mem-rd has been generated by the signal generating unit 75 to obtain the error information for forming the mask from the second memory 74, which stores the error values generated for each of the pixels of the previously binarized slice (step 83). In the preferred embodiment, the processing unit 72 receives the first and second scanning signals L-Mem-rd and S-Mem-rd and forms the mask accordingly.

When the second memory scanning signal S-Mem-rd is generated, the value of position 4 of the mask shown in figure 5 is shifted to position 3 and the error value of the pixel preceding corresponding to the pixel X to be binarized is input to position 4. In other words, operations □ and □ of figure 9A is performed.

After input of the error values into positions 1, 3 and 4, a determination is made as to whether or not the signal Center-Value-rd for scanning the value of the pixel to be binarized has been received or generated(step 85). Thereafter, a determination is made as to whether or not position 1 of the mask contains an error value (step 86).

When the signal Center-Value-rd for scanning the value of the pixel to be binarized has been received and position 1 of the mask does not contain a value, the value of the pixel preceding the pixel to be presently binarized is stored in position 1 of the mask and the pixel to be binarized is scanned (step 87). In other words, the value X₁ is input to position 1 of the mask and the value of the scanned pixel is input to the pixel position to be currently binarized presently, i.e., X₂, at the same time.

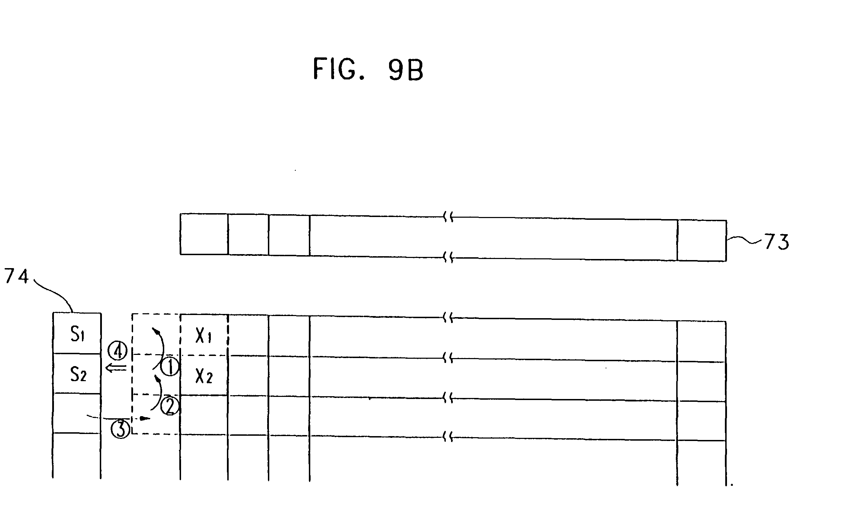

In the case when position 1 of the mask does contain an error value, the value of position 4 of the mask is shifted to position 3, and the value of position 3 is shifted to position 2. Moreover, the error value S₁ corresponding to the pixel of the previously binarized slice which is adjacent to the current pixel X₁ to be binarized is input into position 4 of the mask (step 88). That is, operations ①, ② and ③ of figure 9B are performed.

As described, after forming the mask corresponding to a pixel to be binarized, the present pixel value is binarized using the formed mask and the error value is calculated (step 89). In the binarization method used in the preferred embodiment, the error value corresponding to the relevant pixel is diffused to the neighboring pixels using the error diffusion method.

After calculating the error value, the operation result S₁ of the error value is stored in the position corresponding to the present pixel of the second memory 74 (step 90). That is, operation ⑧ of figure 9A is performed, and after shifting the mask by one (1) pixel in the longitudinal direction and forming the mask, operation ④ of figure 9B is performed.

After the calculation of the result of the error value of the present pixel is stored in the second memory 74, a determination is made as to whether or not the pixel presently binarized is the final one of the slice (step 91).

In the case where the pixel is not the final one, the image processing of the present slice is continuously performed by returning to step 85 and determining whether or not the signal Center-Value-rd for scanning the pixel value to be binarized has been received.

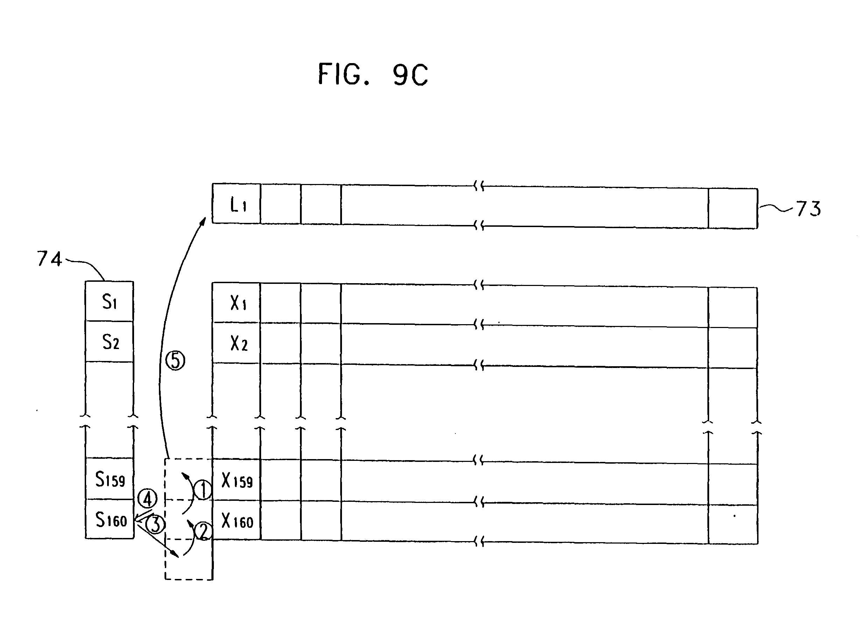

When the pixel is the final one, the error value L₁ is stored in the position corresponding to the present slice of the first memory 73 (step 92). That is, operation ⑤ of figure 9C is performed.

After storing the error value in the position corresponding to the present slice of the first memory 73, it is determined whether the processing of the present band has been completed (step 93).

In the case where the band processing is not complete, the image processing is continuously performed by returning to step 85 and judging whether or not the signal Center-Value-rd for scanning the pixel value to be binarized has been received.

When the band processing has been completed and the scanning operation has not been completed, the image processing is continuously performed by returning to step 81 of judging whether the first memory scanning signal L-Mem-rd has been received. Figure 9D shows the processes ④ and ⑤ for storing the error value of the final pixel of the final slice of the band in the first and second memories 73 and 74.

According to the present invention, the document data can be binarized using a first memory 73 having a number of bytes corresponding to the number of pixels of a document size in the horizontal direction and the second memory 74 capable of storing the bytes corresponding to one slice, without forming a boundary image between each band.

In the preferred embodiment of the present invention, assuming that the document size to be scanned is A4 and the performance of the scanning unit is 300 DPI, the first memory requires the storage capacity of 2,500 bytes capable of storing the 2,500 pixels. When the scanning unit has a scanning element having 160 pixels, the second memory 74 requires the storage capacity of 160 bytes.

As compared to the prior art multifunction machines which require a storage capacity for one band memory of 2,500 bytes x 160 bytes and for the memory for storing basic pixel values for forming the mask, the present invention requires a small amount of memory.

As described above, since the scanned document data is binarized using small amount of memory, the cost reduction of the multifunctional machine can be realized.

## Claims

1. An image processing method for binarizing an image scanned by a scanning unit of shuttle type which performs a shuttle movement and scans a document on a band basis such that a band comprises a plurality of slices, the method comprising the steps of:
scanning pixels of a current slice of a current band of a document;
binarizing each of the pixels of the current slice using a mask;
storing operation results of error values generated during binarizing of final pixels of a plurality of slices of the current band in a first memory;
storing operation results of error values generated during binarizing of each of the pixels of the current slice in a second memory,
wherein the step of binarising each of the pixels of the current slice comprises the steps of, for each of the first pixels of the plurality of slices of the current band, processing the operation results, previously stored in the first memory, of the error values of final pixels of a plurality of slices of a previous band and processing operation results, previously stored in the second memory, of error values generated during binarizing of each of the pixels of a previous slice of the current band; and
wherein the mask has 2 x 3 pixels comprising 1^{st}, 2^{nd}, 3^{rd}, and 4^{th} positions at co-ordinate values of (2, 1), (1, 1), (1, 2) and (1, 3),respectively and a 5^{th} position of a current pixel, X, to be binarized at a coordinate position of (2, 2).

2. A method as claimed in claim 1, further comprising the step of forming the mask by:
shifting a value of the 1^{st} position of the mask to the 4^{th} position of the mask when binarising the first pixel of the current slice, reading, from said first memory, an error value of a final pixel of a slice of the previous band corresponding to the current pixel and placing the read value in the 1^{st} position of the mask;
shifting a value of the 4^{th} position of the mask to the 3^{rd} position of the mask, reading, from the second memory, an error value of a pixel of the previous slice corresponding to the current pixel, X, and placing the read error value in the 4^{th} position of the mask;
filling in the 1^{st} position of the mask with a value of a pixel, of the same slice, preceding the current pixel, X, when a signal for reading the value of the current, X, is received and the 1^{st} position is not occupied; and
when the 1^{st} position is occupied, shifting the value of the 4^{th} position of the mask to the 3^{rd} position of the mask and shifting the value of the 3^{rd} position of the mask to the 2^{nd} position of the mask, and placing an error value of a pixel of the previous slice having a horizontal coordinate value larger by one than that of the current pixel, X, in the 4^{th} position of the mask.

3. An image processing apparatus for binarizing an image scanned by a scanning unit of shuttle type which performs a shuttle movement and scans a document on a band basis such that a band comprises a plurality of slices, the apparatus comprising:
means for scanning pixels of a current slice of a current band of a document;
means for binarizing each of the pixels of the current slice using a mask;
means for storing operation results of error values generated during binarizing of final pixels of a plurality of slices of the current band in a first memory;
means for storing operation results of error values generated during binarizing of each of the pixels of the current slice in a second memory,
wherein the means for binarising each of the pixels of the current slice comprises means for processing, for each of the first pixels of the plurality of slices of the current band, the operation results, previously stored in the first memory, of the error values of final pixels of a plurality of slices of a previous band and means for processing operation results, previously stored in the second memory, of error values generated during binarizing of each of the pixels of a previous slice of the current band; and
wherein the mask has 2 x 3 pixels comprising 1^{st}, 2^{nd}, 3^{rd}, and 4^{th} positions at co-ordinates of (2, 1), (1, 1), (1, 2) and (1, 3), respectively and a 5^{th} position of a current pixel, X at be binarized at coordinates of (2, 2).

4. An apparatus as claimed in claim 3, further comprising means for forming the mask comprising:
means for shifting a value of the 1^{st} position of the mask to the 4^{th} position of the mask when binarizing the first pixel of the current slice, reading, from said first memory, an error value of a final pixel of a slice of the previous band corresponding to the current pixel and placing the read value in the 1^{st} position of the mask;
means for shifting a value of the 4^{th} position of the mask to the 3^{rd} position of the mask, reading, from the second memory, an error value of a pixel of the previous slice corresponding to the current pixel, X, and placing the read error value in the 4^{th} position of the mask;
means for filling in the 1^{st} position of the mask with a value of a pixel, of the same slice, preceding the current pixel, X, when a signal for reading the value of the current, X, is received and the 1^{st} position is not occupied; and
means for shifting the value of the 4^{th} position of the mask to the 3^{rd} position of the mask and shifting the value of the 3^{rd} position of the mask to the 2^{nd} position of the mask when the 1^{st} position is occupied, and means for placing an error value of a pixel of the previous slice having a horizontal coordinate value larger by one than that of the current pixel, X, in the 4^{th} position of the mask.

## Patentansprüche

1. Bildverarbeitungsverfahren zum Digitalisieren eines Bilds, das von einer Abtasteinheit von sich hin und her bewegender Art abgetastet wird, die eine Pendelbewegung durchführt und ein Dokument auf einer Bandbasis so abtastet, dass ein Band eine Vielzahl von Teilen (slices) umfasst, wobei das Verfahren die folgenden Schritte umfasst:
Abtasten von Pixeln eines aktuellen Teils eines aktuellen Bands eines Dokuments;
Digitalisieren jedes der Pixel des aktuellen Teils unter Verwendung einer Maske;
Speichern von Verfahrensergebnissen von Fehlerwerten, die während des Digitalisierens von letzten Pixeln einer Vielzahl von Teilen des aktuellen Bands generiert werden, in einem ersten Speicher;
Speichem von Verfahrensergebnissen von Fehlerwerten, die während des Digitalisierens jedes der Pixel des aktuellen Teils generiert werden, in einem zweiten Speicher,
wobei der Schritt des Digitalisierens jedes der Pixel des aktuellen Teils die Schritte, für jedes der ersten Pixel der Vielzahl von Teilen des aktuellen Bands, des Verarbeitens der vorher in dem ersten Speicher gespeicherten Verfahrensergebnisse der Fehlerwerte von letzten Pixeln einer Vielzahl von Teilen eines vorherigen Bands und des Verarbeitens von vorher in dem zweiten Speicher gespeicherten Vorgangsergebnissen von Fehlerwerten, die während des Digitalisierens jedes der Pixel eines vorherigen Teils des aktuellen Bands generiert wurden, umfasst; und
wobei die Maske 2 x 3 Pixel aufweist, die 1., 2., 3. und 4. Positionen jeweils auf Koordinatenwerten von (2, 1), (1, 1), (1, 2) und (1, 3) aufweisen und eine 5. Position eines aktuellen Pixels X, das auf einer Koordinatenposition von (2, 2) digitalisiert werden soll.

2. Verfahren nach Anspruch 1, des Weiteren umfassend den Schritt des Ausbildens der Maske durch:
Verschieben eines Werts von der 1. Position der Maske auf die 4. Position der Maske, wenn das erste Pixel des aktuellen Teils digitalisiert wird, wobei aus dem ersten Speicher ein Fehlerwert eines letzten Pixels eines Teils des vorherigen Bands ausgelesen wird, das dem aktuellen Pixel entspricht, und der gelesene Wert auf die 1. Position der Maske gesetzt wird;
Verschieben eines Werts von der 4. Position der Maske auf die 3. Position der Maske, wobei aus dem zweiten Speicher ein Fehlerwert eines Pixels des vorherigen Teils ausgelesen wird, das dem aktuellen Pixel X entspricht, und der gelesene Wert auf die 4. Position der Maske gesetzt wird;
Füllen der 1. Position der Maske mit einem Wert eines Pixels aus dem gleichen Teil, das dem aktuellen Pixel X vorausgeht, wenn ein Signal zum Lesen des Werts des aktuellen X empfangen wird und die 1. Position nicht besetzt ist; und
wenn die 1. Position besetzt ist, Verschieben des Werts von der 4. Position der Maske auf die 3. Position der Maske und Verschieben des Werts von der 3. Position der Maske auf die 2. Position der Maske und Setzen eines Fehlerwerts eines Pixels der vorhergehenden Teils mit einem horizontalen Koordinatenwert, der um eins größer ist als derjenige des aktuellen Pixels X, auf die 4. Position der Maske.

3. Bildverarbeitende Vorrichtung zum Digitalisieren eines Bilds, das von einer Abtasteinheit von sich hin und her bewegender Art abgetastet wird, die eine Pendelbewegung durchführt und ein Dokument auf einer Bandbasis so abtastet, dass ein Band eine Vielzahl von Teilen umfasst, wobei die Vorrichtung umfasst:
eine Einrichtung zum Abtasten von Pixeln eines aktuellen Teils eines aktuellen Bands eines Dokuments;
eine Einrichtung zum Digitalisieren jedes der Pixel des aktuellen Teils unter Verwendung einer Maske;
eine Einrichtung zum Speichern von Verfahrensergebnissen von Fehlerwerten, die während des Digitalisierens von letzten Pixeln einer Vielzahl von Teilen des aktuellen Bands generiert werden, in einem ersten Speicher;
eine Einrichtung zum Speichern von Verfahrensergebnissen von Fehlerwerten, die während des Digitalisierens jedes der Pixel des aktuellen Teils generiert werden, in einem zweiten Speicher,
wobei die Einrichtung zum Digitalisieren jedes der Pixel des aktuellen Teils eine Einrichtung zum Verarbeiten, für jedes der ersten Pixel der Vielzahl von Teilen des aktuellen Bands, der vorher in dem ersten Speicher gespeicherten Verfahrensergebnisse der Fehlerwerte von letzten Pixeln einer Vielzahl von Teilen eines vorherigen Bands und eine Einrichtung zum Verarbeiten von vorher in dem zweiten Speicher gespeicherten Vorgangsergebnissen von Fehlerwerten, die während des Digitalisierens jedes der Pixel eines vorherigen Teils des aktuellen Bands generiert wurden, umfasst; und
wobei die Maske 2 x 3 Pixel aufweist, die 1., 2., 3. und 4. Positionen jeweils auf Koordinaten von (2, 1), (1, 1), (1, 2) und (1, 3) aufweisen und eine 5. Position eines aktuellen Pixels X, das auf Koordinaten von (2, 2) digitalisiert werden soll.

4. Vorrichtung nach Anspruch 3, des Weiteren umfassend Einrichtungen zum Ausbilden der Maske, umfassend:
eine Einrichtung zum Verschieben eines Werts von der 1. Position der Maske auf die 4. Position der Maske, wenn das erste Pixel des aktuellen Teils digitalisiert wird, wobei aus dem ersten Speicher ein Fehlerwert eines letzten Pixels eines Teils des vorherigen Bands ausgelesen wird, das dem aktuellen Pixel entspricht, und der gelesene Wert auf die 1. Position der Maske gesetzt wird;
eine Einrichtung zum Verschieben eines Werts von der 4. Position der Maske auf die 3. Position der Maske, wobei aus dem zweiten Speicher ein Fehlerwert eines Pixels des vorherigen Teils ausgelesen wird, das dem aktuellen Pixel X entspricht, und der gelesene Wert auf die 4. Position der Maske gesetzt wird;
eine Einrichtung zum Füllen der 1. Position der Maske mit einem Wert eines Pixels aus dem gleichen Teil, das dem aktuellen Pixel X vorausgeht, wenn ein Signal zum Lesen des Werts des aktuellen X empfangen wird und die 1. Position nicht besetzt ist; und
eine Einrichtung zum Verschieben des Werts von der 4. Position der Maske auf die 3. Position der Maske und Verschieben des Werts von der 3. Position der Maske auf die 2. Position der Maske, wenn die 1. Position nicht besetzt ist, und eine Einrichtung zum Setzen eines Fehlerwerts eines Pixels der vorhergehenden Teils mit einem horizontalen Koordinatenwert, der um eins größer ist als derjenige des aktuellen Pixels X, auf die 4. Position der Maske.

## Revendications

1. Procédé de traitement d'image pour binariser une image scannée par une unité de balayage de type navette qui effectue un mouvement de navette et scanne un document sur une base de bande de telle sorte qu'une bande comprenne une pluralité de tranches, le procédé comprenant les étapes consistant à :
- scanner des pixels d'une tranche courante d'une bande courante d'un document ;
- binariser chacun des pixels de la tranche courante à l'aide d'un masque ;
- stocker des résultats d'opération de valeurs d'erreur générées pendant la binarisation de pixels finals d'une pluralité de tranches de la bande courante dans une première mémoire ;
- stocker des résultats d'opération de valeurs d'erreur générées pendant la binarisation de chacun des pixels de la tranche courante dans une seconde mémoire,
dans lequel l'étape de binarisation de chacun des pixels de la tranche courante comprend les étapes de, pour chacun des premiers pixels de la pluralité de tranches de la bande courante, traitement des résultats d'opération, précédemment stockés dans la première mémoire, des valeurs d'erreur de pixels finals d'une pluralité de tranches d'une bande précédente, et de traitement de résultats d'opération, précédemment stockés dans la seconde mémoire, de valeurs d'erreur générées pendant la binarisation de chacun des pixels d'une tranche précédente de la bande courante ; et
dans lequel le masque a 2 x 3 pixels comprenant des 1^{ère}, 2^{ème}, 3^{ème} et 4^{ème} positions à des valeurs de coordonnées de respectivement (2,1), (1,1), (1,2) et (1,3), et une 5^{ème} position d'un pixel courant, X, devant être binarisé à une position de coordonnées de (2,2).

2. Procédé selon la revendication 1, comprenant en outre l'étape de formation du masque par :
- déplacement d'une valeur de la 1^{ère} position du masque à la 4^{ème} position du masque lors de la binarisation du premier pixel de la tranche courante, lecture, à partir de ladite première mémoire, d'une valeur d'erreur d'un pixel final d'une tranche de la bande précédente correspondant au pixel courant, et mise en place de la valeur lue dans la 1^{ère} position du masque ;
- déplacement d'une valeur de la 4^{ème} position du masque à la 3^{ème} position du masque, lecture, à partir de la seconde mémoire, d'une valeur d'erreur d'un pixel de la tranche précédente correspondant au pixel courant, X, et mise en place de la valeur d'erreur lue dans la 4^{ème} position du masque ;
- remplissage de la 1^{ère} position du masque par une valeur d'un pixel, de la même tranche, précédant le pixel courant, X, lorsqu'un signal pour la lecture de la valeur du pixel courant, X, est reçu et que la 1^{ère} position n'est pas occupée ; et
- lorsque la 1^{ère} position est occupée, déplacement de la valeur de la 4^{ème} position du masque à la 3^{ème} position du masque et déplacement de la valeur de la 3^{ème} position du masque à la 2^{ème} position du masque, et mise en place d'une valeur d'erreur d'un pixel de la tranche précédente ayant une valeur de coordonnée horizontale supérieure de un à celle du pixel courant, X, dans la 4^{ème} position du masque.

3. Appareil de traitement d'image pour la binarisation d'une image scannée par une unité de balayage de type navette qui effectue un mouvement de navette et scanne d'un document sur une base de bande de telle sorte qu'une bande comprenne une pluralité de tranches, l'appareil comprenant :
- un moyen pour scanner des pixels d'une tranche courante d'une bande courante d'un document ;
- un moyen pour binariser chacun des pixels de la tranche courante à l'aide d'un masque ;
- un moyen pour stocker des résultats d'opération de valeurs d'erreur générées pendant la binarisation de pixels finals d'une pluralité de tranches de la bande courante dans une première mémoire ;
- un moyen pour stocker des résultats d'opération de valeurs d'erreur générées pendant la binarisation de chacun des pixels de la tranche courante dans une seconde mémoire,
dans lequel le moyen pour binariser chacun des pixels de la tranche courante comprend un moyen pour traiter, pour chacun des premiers pixels de la pluralité de tranches de la bande courante, les résultats d'opération, précédemment stockés dans la première mémoire, des valeurs d'erreur de pixels finals d'une pluralité de tranches d'une bande précédente, et un moyen pour traiter des résultats d'opération, précédemment stockés dans la seconde mémoire, de valeurs d'erreur générées pendant la binarisation de chacun des pixels d'une tranche précédente de la bande courante ; et
dans lequel le masque a 2 x 3 pixels comprenant des 1^{ère}, 2^{ème}, 3^{ème} et 4^{ème} positions aux coordonnées de respectivement (2,1), (1,1), (1,2), et (1,3), et une 5^{ème} position d'un pixel courant, X, devant être binarisé aux coordonnées de (2,2).

4. Appareil selon la revendication 3, comprenant en outre un moyen de formation du masque comprenant :
- un moyen pour déplacer une valeur de la 1^{ère} position du masque à la 4^{ème} position du masque lors de la binarisation du premier pixel de la tranche courante, lire, à partir de ladite première mémoire, une valeur d'erreur d'un pixel final d'une tranche de la bande précédente correspondant au pixel courant, et placer la valeur lue dans la 1^{ère} position du masque ;
- un moyen pour déplacer une valeur de la 4^{ème} position du masque à la 3^{ème} position du masque, lire, à partir de la seconde mémoire, une valeur d'erreur d'un pixel de la tranche précédente correspondant au pixel courant, X, et placer la valeur d'erreur lue dans la 4^{ème} position du masque ;
- un moyen pour remplir la 1^{ère} position du masque par une valeur d'un pixel, de la même tranche précédant le pixel courant, X, lorsqu'un signal pour lire la valeur du pixel courant, X, est reçu et que la 1^{ère} position n'est pas occupée ; et
- un moyen pour déplacer la valeur de la 4^{ème} position du masque à la 3^{ème} position du masque et pour déplacer la valeur de la 3^{eme} position du masque à la 2^{ème} position du masque lorsque la 1^{ère} position est occupée, et un moyen pour placer une valeur d'erreur d'un pixel de la tranche précédente ayant une valeur de coordonnée horizontale supérieure de un à celle du pixel courant, X, dans la 4^{ème} position du masque.
